# EUROPÄISCHE PATENTSCHRIFT

(11) **EP 3 672 784 B1**
(45) Veröffentlichungstag und Bekanntmachung des Hinweises auf die Patenterteilung: **04.08.2021**
(21) Anmeldenummer: 18759292.8
(22) Anmeldetag: 22.08.2018
(51) Int. Cl.: B29C 65/08, B29L 9/00, B29K 23/00, B29K 705/02

(54) **SCHWEISSVERFAHREN FÜR EINEN MEHRSCHICHTIGEN VERBUND MIT BARRIERESCHICHT**
WELDING METHOD FOR A MULTILAYER COMPOSITE HAVING A BARRIER LAYER
PROCÉDÉ DE SOUDAGE POUR UN COMPOSITE MULTICOUCHE COMPRENANT UNE COUCHE BARRIÈRE

(30) Priorität: 23.08.2017 DE 102017119273
(43) Veröffentlichungstag der Anmeldung: 01.07.2020
(73) Patentinhaber: Herrmann Ultraschalltechnik GmbH & Co. Kg, 76307 Karlsbad (DE)
(72) Erfinder: SCHOLZ, Norman, 76307 Karlsbad (DE)
(74) Vertreter: WSL Patentanwälte Partnerschaft mbB
(86) Internationale Anmeldenummer: PCT/EP2018/072680
(87) Internationale Veröffentlichungsnummer: WO 2019/038334

(56) Entgegenhaltungen:
- EP-A1- 0 435 638
- EP-A1- 1 241 098
- US-A1- 2014 338 842
- US-A1- 2015 090 405

## Beschreibung

Die vorliegende Erfindung betrifft ein Verfahren zur Herstellung einer zwei Materialbahnen aus einem mehrschichtigen Verbund mit einer Barriereschicht verbindenden Siegelnaht, bei dem die zwei Materialbahnen zwischen Siegelflächen eines ersten und eines zweiten Werkzeuges positioniert werden.

Um eine Siegelnaht zu erzeugen wird z.B. ein Schweißwerkzeug verwendet. Dabei ist eine Siegelnaht eine Verbindungsnaht zwischen zwei Materialbahnen. Siegeln bedeutet das Verbinden der Materialbahnoberflächen. Zumeist erfolgt dies durch Einwirkung von hohen Temperaturen. Siegelnähte werden vor allem zur Herstellung und zum Verschließen von Beuteln und Säcken sowie zur Aufbringung von Deckelfolien auf Bechern oder Schalen in der Verpackungsindustrie verwendet.

Das Schweißwerkzeug hat eine Siegelfläche mit einer Breite b. Für die Erzeugung einer Siegelnaht wird die Siegelfläche gegebenenfalls unter Druck auf die zu bearbeitenden Materialbahnen gedrückt. In der Regel ist ein entsprechendes Gegenwerkzeug vorgesehen, so dass die zu bearbeitenden Materialbahnen zwischen Schweißwerkzeug und Gegenwerkzeug eingeklemmt werden.

Derartige Verfahren und Schweißwerkzeuge sind bereits bekannt. Die EP 1 241 098 betrifft eine Ultraschallquerversiegelungsvorrichtung zum Verschließen von Wänden eines Verpackungsmaterials, das mit einem gießfähigen Lebensmittelprodukt befüllt ist. Die Ultraschallquersiegelungsvorrichtung weist zwei Backen auf, zwischen denen zwei Materialbahnen mit einer Barriereschicht miteinander verschweißt werden können. Eine Backe weist einen Längsversiegelungsabschnitt auf, der einen mittleren Abschnitt hat, welcher quer zur Backe verlaufende Rillen aufweist.

Die EP 0 435 638 betrifft einen versiegelten Behälter, der zur Verpackung von Lebensmitteln geeignet ist, der einen Kunststoffhauptkörper mit einem Flanschabschnitt und einen Deckel umfasst, wobei der Deckel leicht abgezogen werden kann, sowie ein Verfahren zum Herstellen des versiegelten Behälters.

Insbesondere in der Verpackungsindustrie kommen häufig Verbundfolien zum Einsatz, die aus einzelnen Schichten bestehen, welche für den jeweiligen Einsatzfall optimiert sind. Solche Verbundfolien werden auch als mehrschichtigen Verbund bezeichnet. Häufig kommt eine so genannte Barriereschicht zur Anwendung. Diese kann beispielsweise aus Aluminium bestehen und dient dazu, mit der Verbundfolie verpackte Produkte vor Lichteinstrahlung und insbesondere vor der Exposition mit UV-Licht zu schützen. Beispielsweise könnte eine solche Verbundfolie aus vier Schichten bestehen, nämlich aus einer Papierschicht, einer PE-Schicht, einer Aluminiumschicht und einer PE-Schicht.

In der Regel werden die Siegelnähte in Materialbahnen eingebracht, in denen sich bereits das zu verpackende Produkt befindet, so dass damit zu rechnen ist, dass sich zwischen zwei miteinander zu verschweißenden Materialbahnen unter Umständen noch Produktreste befinden, die ein Verschweißen der Materialbahnen erschweren.

In der Regel kann die Schweißqualität, d.h. u.a. die Festigkeit, mit der zwei Materialbahnen miteinander befestigt werden, dadurch erhöht werden, dass der Druck, mit dem das Schweißwerkzeug auf die Materialbahn gedrückt wird, erhöht wird. Zudem ist es bekannt, das Schweißwerkzeug und gegebenenfalls auch das gegenüberliegende Gegenwerkzeug mit einem Profil auszustatten, so dass das entsprechende Profil in die Materialbahn gedrückt wird und dabei die Festigkeit erhöht wird und Produktreste besser aus dem Bearbeitungsbereich verdrängt werden.

Die Verwendung von profilierten Siegelflächen sowie eine Erhöhung des Druckes führt jedoch häufig dazu, dass die Barriereschicht beschädigt wird, so dass tatsächlich, obgleich es zu einer festen Verbindung der Materialbahnen gekommen ist, in geringer Menge UV-Licht in den Beutel eindringen kann, was sich möglicherweise nachteilig auf die Qualität des verpackten Produktes ausüben kann.

Dies kann nur verhindert werden, wenn der Druck auf die Materialbahn verringert wird, was jedoch möglicherweise zu einer Verbindung der Materialbahnen führt, die den Anforderungen an Festigkeit nicht gerecht wird, insbesondere wenn sich Produktreste zwischen den Materialbahnen befinden.

Es ist daher Aufgabe der vorliegenden Erfindung, ein Schweißverfahren bereitzustellen, mit dem Siegelnähte erzeugt werden können, die einerseits höchste Ansprüche an die Festigkeit erfüllen und andererseits verhindern, dass Licht, insbesondere UV-Licht, in das zu verpackende Produkt eindringen kann.

Diese Aufgabe wird dadurch gelöst, dass die zwei Materialbahnen zwischen Siegelflächen eines ersten und eines zweiten Werkzeuges derart positioniert werden, dass die miteinander zu verbindenden Abschnitte der Materialbahn aufeinander und zwischen den Siegelflächen liegen, die beiden Werkzeuge aufeinander zugefahren werden, so dass die beiden Siegelflächen zur Herstellung der Siegelnaht aufeinandergedrückt werden, wobei das erste Werkzeug eine Ultraschallsonotrode ist, die mit einer Ultraschallschwingung angeregt wird während die beiden Siegelflächen aufeinandergedrückt werden, und die Siegelnaht mit zwei nebeneinanderliegenden Nähten, einer Hauptnaht und einer Nebennaht, hergestellt wird, wobei die Siegelflächen derart ausgewählt werden, dass in einem Hauptbearbeitungsabschnitt der maximale Abstand zwischen den beiden Siegelflächen kleiner als der Maximalabstand zwischen den beiden Siegelfläche in einem ersten Nebenbearbeitungsabschnitt ist, wobei Hauptbearbeitungsabschnitt und Nebenbearbeitungsabschnitt nebeneinanderliegen, so dass bei der Herstellung der Hauptnaht die beiden Siegelflächen einen Hauptschweißdruck auf die Materialbahnen ausüben und bei der Herstellung der Nebennaht die beiden Siegelflächen einen Nebenschweißdruck auf die Materialbahnen ausüben, wobei der Nebenschweißdruck zumindest abschnittsweise kleiner als der Hauptschweißdruck ist, wobei die von dem Nebenbearbeitungsabschnitt erzeugte Nebennaht einem in den Materialbahnen einzuschließenden Produkt zugewandt ist und die von dem Hauptbearbeitungsabschnitt erzeugte Hauptnaht von dem in den Materialbahnen einzuschließenden Produkt abgewandt ist, wobei während des Schweißvorgangs die Materialbahnen in ihrer Position verbleiben und im Nebenbearbeitungsabschnitt zumindest eine der beiden Siegelflächen strukturiert ist.

Dabei sollten Hauptnaht und Nebennaht direkt aneinander anschließen, so dass Hauptnaht und Nebennaht parallel zueinander verlaufen. Die Siegelnaht besteht im Ergebnis aus einem Teil, der durch Aufbringen eines vergleichsweise höheren Druckes hergestellt wurde, und aus einem Teil der durch Aufbringen eines vergleichsweise kleineren Druckes hergestellt wurde. Die Hauptnaht hat eine größere Festigkeit als die Nebennaht. Allerdings besteht bei der Hauptnaht das Risiko, dass eine Barriereschicht beschädigt worden ist. Dadurch, dass der Druck, der bei der Herstellung der Nebennaht verwendet worden ist, geringer ist, ist das Risiko der Beschädigung der Barriereschicht bei der Nebennaht deutlich geringer.

In dem Hauptbearbeitungsabschnitt wird somit die Hauptnaht hergestellt, während in dem Nebenbearbeitungsabschnitt die Nebennaht hergestellt wird. Haupt- und Nebennaht können in einem einzigen Bearbeitungsschritt gleichzeitig hergestellt werden.

Durch das erfindungsgemäße Verfahren wird daher eine Siegelnaht erzeugt, bei der im Bereich des Hauptbearbeitungsabschnittes aufgrund des kleineren maximalen Abstandes eine größere Kraft auf die Materialbahn ausgeübt wird, so dass es in diesem Bereich zu einer festen Verbindung zwischen den Materialbahnen kommt. Direkt anschließend an den Hauptbearbeitungsabschnitt befindet sich der erste Nebenbearbeitungsabschnitt, der sich dadurch auszeichnet, dass der maximale Abstand zwischen den beiden Siegelflächen größer ausgebildet ist, so dass hier die auf die Materialbahnen übertragene Kraft geringer ausfällt und im Bereich des Nebenbearbeitungsabschnittes sichergestellt werden kann, dass eine gegebenenfalls vorhandene Barriereschicht nicht durchtrennt wird.

Die entsprechende Siegelnaht ist dann so zu orientieren, dass der von dem Nebenbearbeitungsabschnitt hergestellte Teil der Siegelnaht dem zu verpackenden Produkt zugewandt ist, während der vom Hauptbearbeitungsabschnitt hergestellte Teil der Siegelnaht dem Produkt abgewendet ist.

In einer bevorzugten Ausführungsform ist die Breite der Hauptnaht größer als die Breite der Nebennaht. Besonders bevorzugt ist die Breite der Hauptnaht mindestens doppelt so groß wie die Breite der Nebennaht.

Erfindungsgemäß ist die Siegelnaht so orientiert, dass die Nebennaht dem zu verpackenden Produkt zugewandt ist.

In einer weiteren besonders bevorzugten Ausführungsform ist vorgesehen, dass die Siegelflächen derart ausgewählt werden, dass neben dem Hauptbearbeitungsabschnitt ein zweiter Nebenbearbeitungsabschnitt gegenüberliegend zum ersten Nebenbearbeitungsabschnitt ausgebildet ist, wobei der maximale Abstand zwischen den beiden Siegelflächen in dem zweiten Nebenbearbeitungsabschnitt größer als der maximale Abstand zwischen den beiden Siegelflächen in dem Hauptbearbeitungsabschnitt ist.

Die mit diesem Verfahren hergestellte Siegelnaht zeichnet sich somit dadurch aus, dass in einem mittleren Abschnitt eine feste Verbindung erzeugt wird, wobei in den beiden äußeren Abschnitten, die von dem ersten und zweiten Nebenbearbeitungsabschnitt hergestellt werden, die Verbindung der Materialbahnen weniger fest ist, jedoch sichergestellt ist, dass eine eventuell vorhandene Aluminiumschicht nicht durchtrennt worden ist.

Der maximale Abstand zwischen gegenüberliegenden Siegelflächen kann dadurch vergrößert werden, dass Ausnehmungen, wie z.B. Rillen, in die Siegelfläche eingebracht werden. Beispielsweise könnte im Bereich der Nebenbearbeitungsabschnitte die Rillen derart eingebracht werden, dass im Ergebnis eine strukturierte Oberfläche bestehend aus Pyramidenstümpfen entsteht. Dabei liegt die Oberseite jedes Pyramidenstumpfes exakt in der gleichen Ebene wie der Hauptbearbeitungsabschnitt.

Alternativ oder in Kombination dazu könnten die Nebenbearbeitungsabschnitte relativ zu dem Hauptbearbeitungsabschnitt zurückgesetzt sein. Beispielsweise könnte die obere Fläche der Pyramidenstumpfstruktur "niedriger" liegen als die vom Hauptbearbeitungsabschnitt bereitgestellte Fläche.

Es versteht sich, dass die Siegelflächen nicht eben sein müssen. Es ist auch möglich, die Schweißwerkzeuge und damit die Siegelflächen auf einer Zylinderfläche auszuführen, wenn die Schweißwerkzeuge bei der Bearbeitung um ihre Achse rotieren, so dass kontinuierlich eine Siegelnaht hergestellt werden kann.

In einer Ausführungsform des für das Verfahren verwendete Schweißwerkzeuges ist vorgesehen, dass die Siegelfläche einen sich in Längsrichtung erstreckenden Hauptabschnitt sowie einen sich in Längsrichtung erstreckenden ersten Nebenabschnitt aufweist, wobei Hauptabschnitt und erster Nebenabschnitt aneinander anschließen und wobei der erste Nebenabschnitt zumindest teilweise gegenüber dem Hauptabschnitt entgegengesetzt zu der Richtung eines Normalenvektors auf der Siegelfläche um einen Abstand a >0 mm zurückgesetzt ist.

Unter einem Normalenvektor auf der Siegelfläche wird ein Vektor verstanden, der senkrecht zur Siegelfläche ausgerichtet ist und dessen Richtung derart orientiert ist, dass sie von dem Schweißwerkzeug weg zeigt.

Die Siegelfläche kann beispielsweise im Wesentlichen eben ausgebildet sein, wobei dann das Schweißwerkzeug zur Erzeugung einer Siegelnaht mit der Siegelfläche für einen vorbestimmten Zeitraum auf die Materialbahn gedrückt wird.

Alternativ dazu kann die Siegelfläche auch auf der Mantelfläche eines Zylinders positioniert sein. In diesem Fall wird das Schweißwerkzeug um die Zylinderachse rotiert, so dass die Siegelfläche auf der Materialbahn abrollt. Mit Hilfe eines solchen Werkzeuges kann eine kontinuierliche Siegelnaht erzeugt werden.

Wesentlich ist jedoch, dass neben dem Hauptabschnitt ein erster Nebenabschnitt angeordnet ist, der gegenüber dem Hauptabschnitt zumindest teilweise zurückgesetzt ist mit der Folge, dass im Bereich des Nebenabschnittes eine geringere Kraft auf die Materialbahn ausgeübt wird, wodurch erreicht werden kann, dass die Gefahr, dass eine in der Materialbahn enthaltene Barriereschicht, wie z.B. eine Aluminiumschicht, durchbrochen wird, reduziert wird.

Durch Verwendung des Schweißwerkzeuges wird daher eine Siegelnaht erzeugt, die aus zwei nebeneinander in Längsrichtung verlaufenden Bereichen besteht, wobei derjenige Bereich, der von dem Hauptabschnitt der Siegelfläche erzeugt worden ist, mit größerem Druck hergestellt worden ist, so dass eine gute Verschweißung der Materialbahnen miteinander zu erwarten ist, und derjenige Bereich, der von dem Nebenabschnitt der Siegelfläche erzeugt worden ist, mit geringerem Druck hergestellt worden ist, so dass sichergestellt ist, dass eine eventuell vorhandene Barriereschicht nicht beschädigt worden ist.

In einer bevorzugten Ausführungsform wird ein Schweißwerkzeug verwendet, bei dem die Siegelfläche einen zweiten Nebenabschnitt aufweist, wobei Hauptabschnitt und zweiter Nebenabschnitt aneinander anschließen, so dass der erste Nebenabschnitt und der zweite Nebenabschnitt auf gegenüberliegenden Seiten des Hauptabschnittes positioniert sind, wobei der zweite Nebenabschnitt zumindest teilweise gegenüber dem Hauptabschnitt entgegengesetzt zu der Richtung eines normalen Vektors auf der Siegelfläche um einen Abstand a>0 mm zurückgesetzt ist.

Mit anderen Worten befindet sich auf jeder Seite des Hauptabschnittes ein entsprechend zurückgesetzter Nebenabschnitt.

Dieses Schweißwerkzeug kann verwendet werden, um aus einer Materialbahn mehrere Beutel zu schweißen. Die entstehende Siegelnaht hat eine Hauptnaht, die in der Mitte angeordnet ist, die durch den Hauptabschnitt gebildet worden ist, in dem eine feste Verschweißung stattgefunden hat. Diese Hauptnaht kann dann in Längsrichtung durchgeschnitten werden, um die einzelnen Verpackungsteile zu trennen.

Grundsätzlich kann das erfindungsgemäße Verfahren bereits dadurch verwirklicht werden, dass im Bereich der Nebenabschnitte eine Struktur in die Siegelfläche eingebracht wird. Beispielsweise könnten Rillen in den Nebenabschnitt eingebracht werden. Diese Rillen könnten beispielsweise derart ausgebildet sein, dass Pyramidenstümpfe im Nebenabschnitt verbleiben. In diesem Fall wären die Oberseiten der Pyramidenstümpfe exakt auf dem gleichen Niveau wie der Hauptabschnitt der Siegelfläche angeordnet. Zwischen den Pyramidenstümpfen sind jedoch dann Bereiche, die gegenüber dem Hauptabschnitt zurückgesetzt sind.

In einer weiteren bevorzugten Ausführungsform des Verfahrens wird ein Schweißwerkzeug verwendet, bei dem der gesamte erste Nebenabschnitt gegenüber dem Hauptabschnitt entgegengesetzt zu der Richtung eines normalen Vektors auf der Siegelfläche um einen Abstand a>0 mm zurückgesetzt ist. Vorzugsweise ist auch der gesamte zweite Nebenabschnitt, sofern ein zweiter Nebenabschnitt vorhanden ist, entsprechend zurückgesetzt.

Weisen die Nebenabschnitte eine strukturierte Oberfläche auf, z.B. die oben beschriebenen Pyramidenstumpfstrukturen, so sind bei dieser Ausführungsform auch die Oberseiten der Pyramidenstümpfe zurückgesetzt, so dass kein Bereich des Nebenabschnittes auf dem gleichen Niveau liegt wie die Siegelfläche des Hauptabschnittes.

Dabei kann der Abstand a relativ klein sein, sollte jedoch möglichst über 0,002 mm und vorzugsweise über 0,004 mm betragen.

Der Effekt wird meist schon erzeugt, wenn der Abstand a kleiner als 0,5 mm, vorzugsweise kleiner als 0,05 mm und besonders bevorzugt kleiner als 0,01 mm beträgt. Wird der Abstand a zu groß gewählt, so erfolgt keine Ausbildung einer Nebennaht mehr und die Barriereschicht umschließt das Produkt nicht mehr vollständig.

Besonders bevorzugt wird ein Schweißwerkzeug verwendet, bei dem das Gegenwerkzeug den beschriebenen Hauptabschnitt und den oder die Nebenabschnitte aufweist.

Weitere Vorteile, Merkmale und Anwendungsmöglichkeiten der vorliegenden Erfindung werden deutlich anhand der folgenden Beschreibung einer bevorzugten Ausführungsform eines Schweißwerkzeuge, das für das erfindungsgemäße Verfahren verwendet wird, und der dazugehörigen Figuren. Es zeigen:
- Figur 1: eine perspektivische Ansicht einer Ausführungsformeines Schweißwerkzeuges, das für das erfindungsgemäße Verfahren verwendet wird,
- Figur 2: eine perspektivische Teilschnittansicht durch die Ausführungsform des Schweißwerkzeuges von Figur 1,
- Figur 3: eine Draufsicht auf die Siegelfläche des Schweißwerkzeuges und
- Figur 4: eine Schnittansicht durch das Schweißwerkzeug.

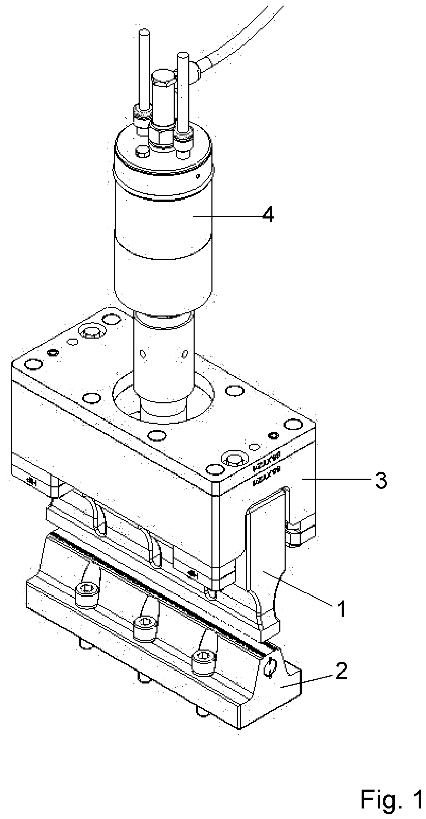

Figur 1 zeigt eine perspektivische Ansicht einer Ausführungsform eines Schweißwerkzeuges, das für die Durchführung des erfindungsgemäßen Verfahrens verwendet wird. Das Schweißwerkzeug weist eine Sonotrode 1 auf, die über einen Amplitudentransformator 5 mit einem Konverter 4 verbunden ist. Der Konverter 4 wandelt eine elektrische Wechselspannung in eine mechanische Ultraschallschwingung um. Zu diesem Zweck weist der Konverter 4 eine Reihe von Piezoelementen auf. Die mechanische Ultraschallschwingung, die der Konverter 4 erzeugt, wird mithilfe des Amplitudentransformators 5 in der Amplitude der Schwingung verändert. Diese Schwingung wird von der Sonotrode 1 ausgeführt. Das komplette Ultraschallschwingsystem, bestehend aus der Sonotrode 1, dem Amplitudentransformator 5 und dem Konverter 4 ist in einer Halterung 3 gehalten, die sich möglichst wenig auf das Schwingungsverhalten des Schwingsystems auswirkt.

Die Sonotrode 1 weist eine in der Figur 1 nach unten gerichtete Siegelfläche auf. Gegenüberliegend zu der Siegelfläche der Sonotrode 1 ist ein Gegenwerkzeug 2 angeordnet, das ebenfalls eine Siegelfläche aufweist, die in Figur 1 nach oben orientiert ist, so dass sich die beiden Siegelflächen, nämlich die Siegelfläche der Sonotrode 1 und die Siegelfläche des Gegenwerkzeuges 2, gegenüberstehen.

Zur Erzeugung von Siegelnähten werden die miteinander zu verbindenden Materialbahnen zwischen der Sonotrode 1 und dem Gegenwerkzeug 2 angeordnet. Die Sonotrode 1 kann dann zusammen mit dem Ultraschallschwingsystem in Richtung des Gegenwerkzeuges 2 bewegt werden, so dass die Materialbahnen sowohl mit der Siegelfläche des Gegenwerkzeuges 2 als auch mit der Siegelfläche der Sonotrode 1 in Eingriff treten. Dadurch wird eine Ultraschallschwingung von der Sonotrode auf die Materialbahn ausgeübt, was zu einer lokalen Aufschmelzung der einzelnen Materialbahnen und deren Verbindung miteinander führt.

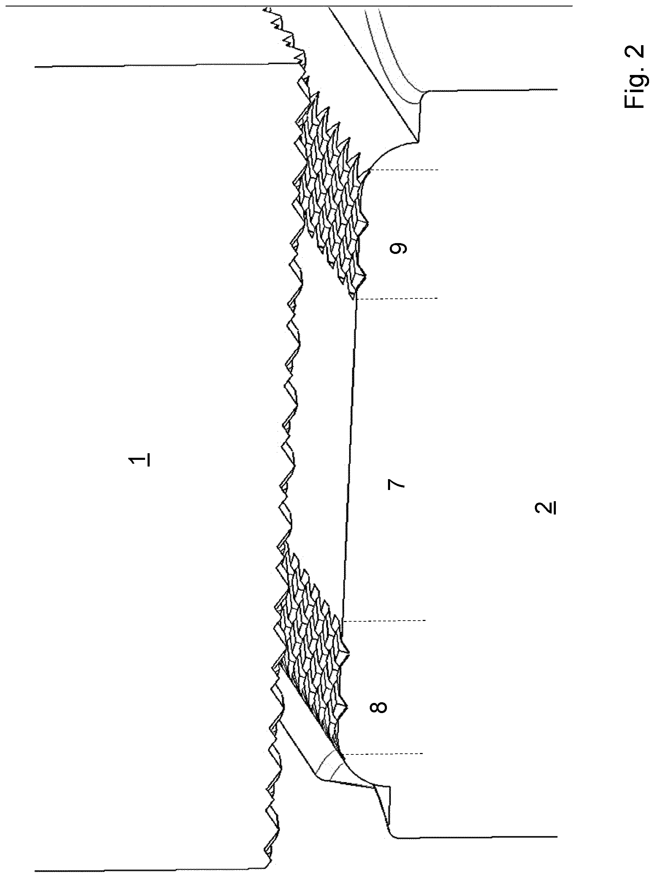

In Figur 2 ist eine perspektivische Schnittansicht durch die Sonotrode 1 und das Gegenwerkzeug 2 gezeigt.

Man erkennt, dass die Sonotrode 1 eine strukturierte Siegelfläche aufweist, die dem Gegenwerkzeug 2 zugewandt ist. Diese strukturierte Fläche kann beispielsweise aus Pyramidenstümpfen bestehen.

Die Siegelfläche des Gegenwerkzeuges 2 besteht aus einem Hauptabschnitt 7, der in Längsrichtung verläuft. In der gezeigten Ausführungsform ist der Hauptabschnitt 7 eben ausgebildet, d.h. er weist keinerlei Strukturierung auf. Auf beiden Seiten des Hauptabschnittes 7 ist jeweils ein Nebenabschnitt 8, 9 angeordnet. In dem gezeigten Beispiel ist in die Nebenabschnitte 8, 9 eine Struktur eingebracht worden, d.h. die der Sonotrode 1 zugewandte Fläche ist abschnittsweise zurückgesetzt bzw. vertieft worden.

Dies hat zur Folge, dass eine Verschweißung von Materialbahnen zwischen der Siegelfläche der Sonotrode 1 und der Siegelfläche des Gegenwerkzeuges 2 im Bereich des Hauptabschnittes 7 mit größerer Kraft erfolgt als im Bereich der Nebenabschnitte 8, 9. Insbesondere dann, wenn ein mehrschichtiger Papierverbund mit einer Barriereschicht, wie z.B. einer Aluminiumschicht, verwendet wird, kann es im Bereich des Hauptabschnittes 7 zu einer Beschädigung der Aluschicht kommen mit der Folge, dass dort Licht in den Verpackungsbeutel eintreten kann. Da jedoch Nebenabschnitte 8, 9 vorgesehen sind, die eine Verschweißung mit geringerer Kraft erlauben, erfolgt im Bereich der Nebenabschnitte 8, 9 keine Beschädigung der Aluschicht, so dass Licht und insbesondere UV-Licht nicht durch die Abschnitte der Siegelnaht dringen können, die mittels der Nebenabschnitte 8, 9 hergestellt worden sind.

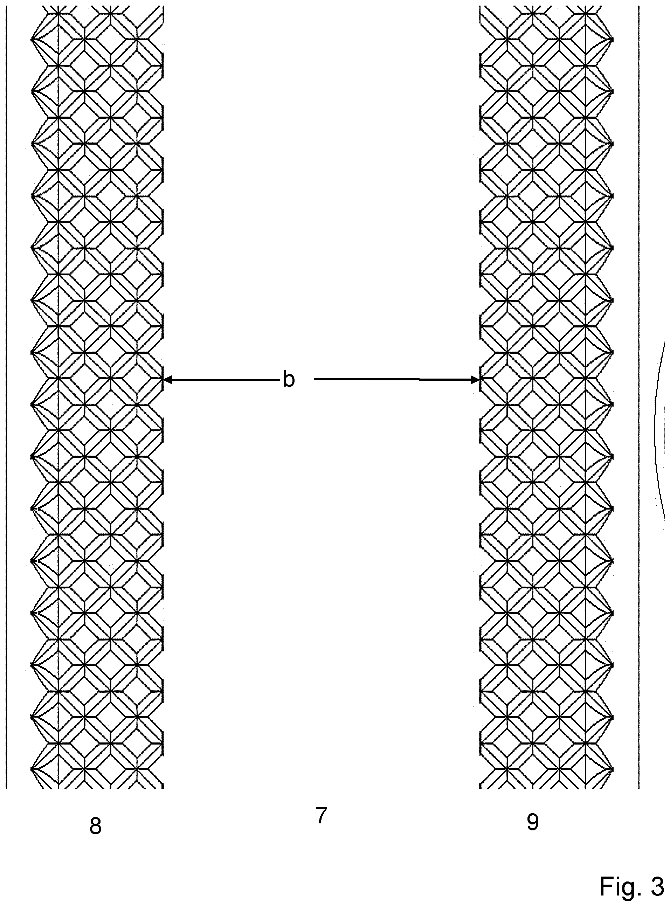

In Figur 3 ist die Siegelflächenstruktur des Gegenwerkzeuges 2 noch einmal in einer Draufsicht dargestellt. Auch hier ist der Hauptabschnitt 7 zu erkennen, der eben ausgeführt ist, während die Nebenabschnitte 8, 9 strukturiert sind. Im gezeigten Beispiel sind V-förmige Nuten rechtwinklig zueinander in die Oberfläche eingebracht worden, so dass sich eine Pyramidenstumpfstrukturierung ergibt. Die Orientierung der Nuten ist derart gewählt, dass diese mit der Längsrichtung einen Winkel von 45° einschließen.

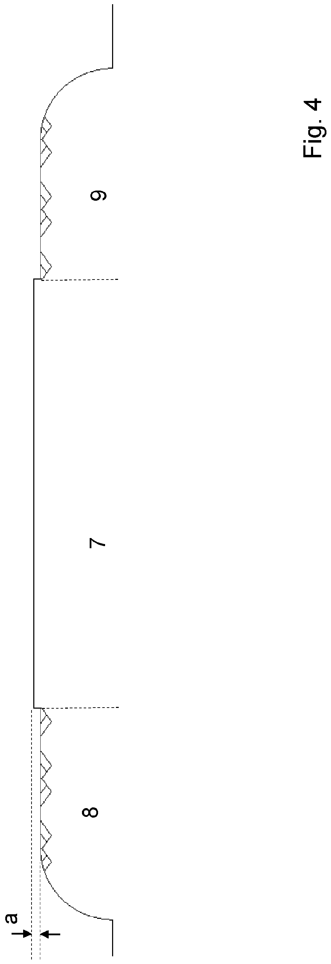

In Figur 4 ist eine weitere Schnittansicht durch das Gegenwerkzeug 2 dargestellt. Man erkennt hier, dass die gesamte Siegelfläche, d.h. auch die Oberseite der Pyramidenstümpfe der strukturierten Nebenabschnitte 8, 9 gegenüber der Ebene des Hauptabschnittes 7 um einen Abstand a zurückgesetzt worden sind. Der Abstand a ist hier zum Zwecke der Illustration stark ausgeprägt gezeichnet. Tatsächlich hat sich jedoch gezeigt, dass der Abstand a im Bereich von 0,005 mm bis 0,01 mm liegen kann, um den Effekt zu erzielen.

### Bezugszeichenliste

- 1: Sonotrode
- 2: Gegenwerkzeug
- 3: Halterung
- 4: Konverter
- 5: Amplitudentransformator
- 7: Hauptabschnitt
- 8,9: Nebenabschnitte

## Patentansprüche

1. Verfahren zur Herstellung einer zwei Materialbahnen aus einem mehrschichtigen Verbund mit einer Barriereschicht verbindenden Siegelnaht, bei dem die zwei Materialbahnen zwischen Siegelflächen eines ersten und eines zweiten Werkzeuges (1, 2) derart positioniert werden, dass die miteinander zu verbindenden Abschnitte der Materialbahnen aufeinander und zwischen den Siegelflächen liegen, die beiden Werkzeuge (1, 2) aufeinander zugefahren werden, so dass die beiden Siegelflächen zur Herstellung der Siegelnaht aufeinandergedrückt werden, wobei das erste Werkzeug eine Ultraschallsonotrode (1) ist, die mit einer Ultraschallschwingung angeregt wird während die beiden Siegelflächen aufeinandergedrückt werden, und die Siegelnaht mit zwei nebeneinanderliegenden Nähten, einer Hauptnaht und einer Nebennaht, hergestellt wird, wobei die Siegelflächen derart ausgewählt werden, dass in einem Hauptbearbeitungsabschnitt der maximale Abstand zwischen den beiden Siegelflächen kleiner als der Maximalabstand zwischen den beiden Siegelflächen in einem ersten Nebenbearbeitungsabschnitt ist, wobei Hauptbearbeitungsabschnitt und Nebenbearbeitungsabschnitt nebeneinanderliegen, so dass bei der Herstellung der Hauptnaht die beiden Siegelflächen einen Hauptschweißdruck auf die Materialbahnen ausüben und bei der Herstellung der Nebennaht die beiden Siegelflächen einen Nebenschweißdruck auf die Materialbahnen ausüben, wobei der Nebenschweißdruck zumindest abschnittsweise kleiner als der Hauptschweißdruck ist, wobei die von dem Nebenbearbeitungsabschnitt erzeugte Nebennaht einem in den Materialbahnen einzuschließenden Produkt zugewandt ist und die von dem Hauptbearbeitungsabschnitt erzeugte Hauptnaht von dem in den Materialbahnen einzuschließenden Produkt abgewandt ist, wobei während des Schweißvorgangs die Materialbahnen in ihrer Position verbleiben und im Nebenbearbeitungsabschnitt zumindest eine der beiden Siegelflächen Strukturelemente aufweist.

2. Verfahren nach Anspruch 1, **dadurch gekennzeichnet, dass** die Siegelflächen derart ausgewählt werden, dass neben dem Hauptbearbeitungsabschnitt ein zweiter Nebenbearbeitungsabschnitt gegenüber liegend zum ersten Nebenbearbeitungsabschnitt ausgebildet wird, wobei der maximale Abstand zwischen den beiden Siegelflächen in dem zweiten Nebenbearbeitungsabschnitt größer als der maximale Abstand zwischen den beiden Siegelflächen in dem Hauptbearbeitungsabschnitt ist.

3. Verfahren nach einem der Ansprüche 1 oder 2, **dadurch gekennzeichnet, dass** die Strukturelemente die Form eines Pyramidenstumpfes haben.

4. Verwendung eines Schweißwerkzeugs mit einer Siegelfläche, die dafür vorgesehen ist, mit einem zu bearbeitenden Material in Kontakt zu treten, wobei die Siegelfläche eine Breite b aufweist, zur Durchführung des Verfahrens nach einem der Ansprüche 1-3, **dadurch gekennzeichnet, dass** die Siegelfläche einen sich in Längsrichtung erstreckenden Hauptabschnitt sowie einen sich in Längsrichtung erstreckenden ersten Nebenabschnitt aufweist, wobei Hauptabschnitt (7) und erster Nebenabschnitt (8) aneinander anschließen, wobei der erste Nebenabschnitt (8) zumindest teilweise gegenüber dem Hauptabschnitt (7) entgegengesetzt zu der Richtung eines Normalenvektors auf der Siegelfläche um einen Abstand a >0 mm zurückgesetzt ist.

5. Verwendung nach Anspruch 4, **dadurch gekennzeichnet, dass** die Siegelfläche einen zweiten Nebenabschnitt (9) aufweist, wobei Hauptabschnitt (7) und zweiter Nebenabschnitt (8) aneinander anschließen, so dass der erste Nebenabschnitt (8) und der zweite Nebenabschnitt (9) auf gegenüberliegenden Seiten des Hauptabschnittes (7) positioniert sind, wobei der zweite Nebenabschnitt (9) zumindest teilweise gegenüber dem Hauptabschnitt (7) entgegengesetzt zu der Richtung eines Normalenvektors auf der Siegelfläche um einen Abstand a >0 mm zurückgesetzt ist.

6. Verwendung nach Anspruch 4 oder Anspruch 5, **dadurch gekennzeichnet, dass** der gesamte erste Nebenabschnitt (8) gegenüber dem Hauptabschnitt (7) entgegengesetzt zu der Richtung eines Normalenvektors auf der Siegelfläche um einen Abstand a >0 mm zurückgesetzt ist.

7. Verwendung nach einem der Ansprüche 4 bis 6, **dadurch gekennzeichnet, dass** der Abstand a >0,002 mm und vorzugsweise a >0,004 mm ist.

8. Verwendung nach einem der Ansprüche 4 bis 7, **dadurch gekennzeichnet, dass** der Abstand a kleiner als 0,5 mm, vorzugsweise a<0,05 mm und besonders bevorzugt a<0,01 mm ist.

9. Verwendung nach einem der Ansprüche 4 bis 8, **dadurch gekennzeichnet, dass** das Schweißwerkzeug eine Ultraschallsonotrode (1) oder ein Gegenwerkzeug (2) für eine Ultraschallsonotrode ist.

10. Verwendung nach einem der Ansprüche 4 bis 9, **dadurch gekennzeichnet, dass** der erste Nebenabschnitt (8) Strukturelemente aufweist, wobei vorzugsweise die Strukturelemente die Form eines Pyramidenstumpfes haben.

## Claims

1. A method of producing a sealing seam connecting two material webs of a multilayer composite with a barrier layer, wherein the two material webs are positioned between sealing surfaces of a first and a second tool (1, 2) in such a way that the portions of the material web, that are to be connected together, lie upon each other and between the sealing surfaces, the two tools (1, 2) are moved towards each other so that the two sealing surfaces for producing the sealing seam are pressed towards each other, wherein the first tool is an ultrasonic sonotrode (1) which is excited with an ultrasonic vibration while the two sealing surfaces are pressed towards each other and the sealing seam is produced with two mutually juxtaposed seams, a main seam and a secondary seam, wherein the sealing surfaces are so selected that in a main processing portion the maximum spacing between the two sealing surfaces is less than the maximum spacing between the two sealing surfaces in a first secondary processing portion, wherein the main processing portion and the secondary processing portion are in mutually juxtaposed relationship so that in the production of the main seam the two sealing surfaces exert a main welding pressure on the material webs and in the production of the secondary seam the two sealing surfaces exert a secondary welding pressure on the material webs, wherein the secondary welding pressure is at least portion-wise less than the main welding pressure, wherein the secondary seam produced by the secondary processing portion faces a product to be included in the material webs and the main seam produced by the main processing portion faces away from the product to be included in the material webs, wherein during the welding operation the material webs remain in their position and in the secondary processing portion at least one of the two sealing surfaces has structure elements.

2. A method according to claim 1 **characterised in that** the sealing surfaces are so selected that besides the main processing portion a second secondary processing portion is provided in opposite relationship with the first secondary processing portion, wherein the maximum spacing between the two sealing surfaces in the second secondary processing portion is greater than the maximum spacing between the two sealing surfaces in the main processing portion.

3. A method according to one of claims 1 or 2 **characterised in that** the structure elements are in the form of a truncated pyramid.

4. Use of a welding tool having a sealing surface which is intended to come into contact with a material to be processed, wherein the sealing surface is of a width b, for carrying out the method according to one of claims 1 to 3, **characterised in that** the sealing surface has a main portion extending in the longitudinal direction and a first secondary portion extending in the longitudinal direction, wherein the main portion (7) and the first secondary portion (8) adjoin each other, wherein the first secondary portion (8) is at least partially set back with respect to the main portion (7) in opposite relationship to the direction of a normal vector on the sealing surface by a distance a>0 mm.

5. Use according to claim 4 **characterised in that** the sealing surface has a second secondary portion (9), wherein the main portion (7) and the second secondary portion (8) adjoin each other so that the first secondary portion (8) and the second secondary portion (9) are positioned on opposite sides of the main portion (7), wherein the second secondary portion (9) is at least partially set back with respect to the main portion (7) in opposite relationship to the direction of a normal vector on the sealing surface by a distance a>0 mm.

6. Use according to claim 4 or claim 5 **characterised in that** the total first secondary portion (8) is set back with respect to the main portion (7) in opposite relationship to the direction of a normal vector on the sealing surface by a distance a>0 mm.

7. Use according to one of claims 4 to 6 **characterised in that** the distance is a>0.002 mm and preferably a>0.004 mm.

8. Use according to one of claims 4 to 7 **characterised in that** the distance a is less than 0.5 mm, preferably a<0.05 mm and particularly preferably a<0.01 mm.

9. Use according to one of claims 4 to 8 **characterised in that** the welding tool is an ultrasonic sonotrode (1) or a counterpart tool (2) for an ultrasonic sonotrode.

10. Use according to one of claims 4 to 9 **characterised in that** the first secondary portion (8) has structure elements, the structure elements preferably being in the form of a truncated pyramid.

## Revendications

1. Procédé pour la réalisation d'un joint scellé réunissant deux bandes de matériau consistant en un composite multicouche comprenant une couche barrière, selon lequel les deux bandes de matériau sont positionnées entre des surfaces de scellage d'un premier et d'un deuxième outil (1, 2) de manière telle que les parties à joindre, l'une à l'autre, des bandes de matériau soient disposées l'une sur l'autre et entre les surfaces de scellage, les deux outils (1, 2) sont approchés l'un de l'autre, si bien que les deux surfaces de scellage soient pressées l'une sur l'autre pour réaliser le joint scellé, le premier outil étant une sonotrode à ultrasons (1) qui est excitée par une onde ultrasons pendant que les deux surfaces de scellage sont pressées l'une sur l'autre, et le joint scellé étant réalisé avec deux joints disposés l'un à côté de l'autre, un joint principal et un joint accessoire, les surfaces de scellage étant choisies de façon telle que, dans une zone de traitement principale, la distance maximale entre les deux surfaces de scellage soit inférieure à la distance maximale entre les deux surfaces de scellage dans une première zone de traitement accessoire, la zone de traitement principale et la zone de traitement accessoire étant situées l'une à côté de l'autre, si bien que, lors de la réalisation du joint principal, les deux surfaces de scellage exercent une pression de scellage principale sur les bandes de matériau et, lors de la réalisation du joint accessoire, les deux surfaces de scellage exercent une pression de scellage accessoire sur les bandes de matériau, la pression de scellage accessoire étant, au moins par zones, inférieure à la pression de scellage principale, le joint accessoire réalisé par la zone de traitement accessoire étant orienté vers un produit destiné à être enfermé dans les bandes de matériau et le joint principal réalisé par la zone de traitement principale étant détourné du produit destiné à être enfermé dans les bandes de matériau, les bandes de matériau restant à leur position pendant l'opération de scellage, et dans la zone de traitement accessoire, au moins une des surfaces de scellage comprenant des éléments de structure.

2. Procédé selon la revendication 1, **caractérisé en ce que** les surfaces de scellage sont choisies de façon telle qu'à côté de la zone de traitement principale, une deuxième zone de traitement accessoire est formée à l'opposé de la première zone de traitement accessoire, la distance maximale entre les deux surfaces de scellage dans la deuxième zone de traitement accessoire étant plus grande que la distance maximale entre les deux surfaces de scellage dans la zone de traitement principale.

3. Procédé selon la revendication 1 ou 2, **caractérisé en ce que** les éléments de structure ont la forme d'une pyramide tronquée.

4. Utilisation d'un outil de scellage avec une surface de scellage qui est destinée à entrer en contact avec un matériau à traiter, la surface de scellage ayant une largeur b, pour la mise en œuvre du procédé selon l'une des revendications 1 à 3, **caractérisée en ce que** la surface de scellage comprend une partie principale s'étendant dans le sens de la longueur ainsi qu'une première partie accessoire s'étendant dans le sens de la longueur, la partie principale (7) et la première partie accessoire (8) étant joints l'un à l'autre, la première partie accessoire (8) étant au moins partiellement reculée par rapport à la partie principale (7) à l'opposé de la direction d'un vecteur normal sur la surface de scellage, d'une distance a > 0 mm.

5. Utilisation selon la revendication 4, **caractérisée en ce que** la surface de scellage comporte une deuxième zone accessoire (9), la zone principale (7) et la deuxième zone accessoire (8) étant raccordées l'une à l'autre, si bien que la première zone accessoire (8) et la deuxième zone accessoire (9) soient positionnées sur des côtés opposés de la zone principale (7), la deuxième zone accessoire (9) étant reculée par rapport à la partie principale (7) à l'opposé de la direction d'un vecteur normal sur la surface de scellage, d'une distance a > 0 mm.

6. Utilisation selon la revendication 4 ou la revendication 5, **caractérisée en ce que** l'ensemble de la première zone accessoire (8) est reculé par rapport à la partie principale (7) à l'opposé de la direction d'un vecteur normal sur la surface de scellage, d'une distance a > 0 mm.

7. Utilisation selon l'une des revendications 4 à 6, **caractérisée en ce que** la distance est de a > 0,002 mm et de préférence de a > 0,004 mm.

8. Utilisation selon l'une des revendications 4 à 7, **caractérisée en ce que** la distance a est inférieure à 0,5 mm, de préférence a < 0,05 mm et de façon particulièrement préférée a < 0,01 mm.

9. Utilisation selon l'une des revendications 4 à 8, **caractérisée en ce que** l'outil de scellage est une sonotrode à ultrasons (1) ou un contre-outil (2) pour une sonotrode à ultrasons.

10. Utilisation selon l'une des revendications 4 à 9, **caractérisée en ce que** la première zone accessoire (8) comprend des éléments de structure, les éléments de structure ayant de préférence la forme d'une pyramide tronquée.
